Europäisches Patentamt

European Patent Office

Office européen des brevets

(19)

(11) **EP 0 981 909 B1**

(12) **EUROPÄISCHE PATENTSCHRIFT**

(45) Veröffentlichungstag und Bekanntmachung des Hinweises auf die Patenterteilung:
**23.04.2003   Patentblatt 2003/17**

(51) Int Cl.7: **H04N 7/30**

(21) Anmeldenummer: **98933457.8**

(22) Anmeldetag: **05.05.1998**

(86) Internationale Anmeldenummer:
**PCT/DE98/01255**

(87) Internationale Veröffentlichungsnummer:
**WO 98/051085 (12.11.1998 Gazette 1998/45)**

(54) **VERFAHREN UND VORRICHTUNG ZUR CODIERUNG UND DECODIERUNG EINES DIGITALISIERTEN BILDES**

METHOD AND DEVICE FOR CODING AND DECODING A DIGITIZED IMAGE

PROCEDE ET DISPOSITIF DE CODAGE ET DE DECODAGE D'UNE IMAGE NUMERISEE

(84) Benannte Vertragsstaaten:
**DE ES FR GB IT NL SE**

(30) Priorität: **07.05.1997  DE 19719383**

(43) Veröffentlichungstag der Anmeldung:
**01.03.2000   Patentblatt 2000/09**

(73) Patentinhaber: **SIEMENS AKTIENGESELLSCHAFT**
**80333 München (DE)**

(72) Erfinder: **KAUP, André**
**D-85635 Höhenkirchen (DE)**

(56) Entgegenhaltungen:
**EP-A- 0 871 335**

• **SUSUMU ITOH ET AL: "ADAPTIVE TRANSFORM CODING OF IMAGES BASED ON VARIABLE-SHAPE -BLOCKS" SIGNAL PROCESSING THEORIES AND APPLICATIONS, BRUSSELS, AUG. 24 - 27, 1992, Bd. 3, Nr. CONF. 6, 24. August 1992, Seiten 1251-1254, XP000356468 VANDEWALLE J;BOITE R; MOONEN M; OOSTERLINCK A**
• **BI M ET AL: "DISCRETE COSINE TRANSFORM ON IRREGULAR SHAPE FOR IMAGE CODING" PROCEEDINGS OF THE REGION TEN CONFERENCE (TENCON), BEIJING, OCT. 19 - 21, 1993, Bd. 3, 19. Oktober 1993, Seiten 402-405, XP000521446 YUAN BAOZONG (ED )**
• **SIKORA T ET AL: "SHAPE-ADAPTIVE DCT FOR GENERIC CODING OF VIDEO" IEEE TRANSACTIONS ON CIRCUITS AND SYSTEMS FOR VIDEO TECHNOLOGY, Bd. 5, Nr. 1, 1. Februar 1995, Seiten 59-62, XP000488410 in der Anmeldung erwähnt**
• **KAUFF P ET AL: "An extension of shape-adaptive DCT (SA-DCT) towards DC separation and Delta DC correction" PICTURE CODING SYMPOSIUM. PCS 97, BERLIN, GERMANY, 10-12 SEPT. 1997, Nr. 143, Seiten 647-652, XP002077333 ISSN 0341-0196, ITG-Fachberichte, 1997, VDE-Verlag, Germany**
• **MPEG-4 Video Verification Model Version 7.0 ISO/IEC JTC1/SC29/WG11, MPEG97/N1642, XP002144264, pages 56-60, April 1997**

**Beschreibung**

Die Erfindung betrifft die Codierung und Decodierung eines Videodatenstroms, der digitalisierte Bilder enthält.

Die Codierung von Videosignalen entsprechend den Bildcodierungstandards MPEG (MPEG1, MPEG2) [1], JPEG [2], H.261 [3], H.263 [4], basiert auf dem Prinzip der sogenannten blockbasierten Bildcodierung.

Die blockbasierten Bildcodierverfahren verwenden Prinzipien der Prädiktionscodierung und der Transformationscodierung.

Bei der Prädiktion werden Differenzbilder durch Subtraktion prädizierter Bilddaten von den zu codierenden ursprünglichen Bilddaten erzeugt.

Zur Prädiktion wird eine sogenannte bewegungskompensierte Prädiktion verwendet. Die Grundlagen der hierzu erforderlichen Bewegungsschätzung und ihre Anwendung zur bewegungskompensierten Prädiktion sind dem Fachmann bekannt [5]. Die Bewegungsschätzung erfolgt für einen zu codierenden Bildblock derart, daß Luminanzinformation (Helligkeitsinformation), die jeweils jedem Bildpunkt des Bildes zugeordnet ist, des zu codierenden Bildblock mit Luminanzinformation eines Bereichs der gleichen Form in einem gespeicherten zeitlich vorangegangenen Bild verglichen wird. Der Vergleich erfolgt üblicherweise durch Bildung der absoluten Differen der einzelnen Luminanzwerte. Der Vergleich erfolgt für den zu codierenden Bildblock mit mehreren Bereichen des vorangegangenen Bildes, die im weiteren als vorangegangene Bildblöcke bezeichnet werden. Die Differenzbilder enthalten nunmehr nur noch die Differenz der Luminanzwerte des Bildblocks und der Luminanzwerte des bei der Bewegungsschätzung am "besten" übereinstimmenden vorangegangenen Bildblocks.

Die in den Differenzbildern vorhandenen örtlichen Korrelationen zwischen benachbarten Bildpunkten werden mit Hilfe einer geeigneten Transformation, zum Beispiel mit Hilfe der diskreten Cosinustransformation (DCT), ausgenutzt. Die verwendete Transformationscodierung liefert Transformationscodierungskoeffizienten, die einer Quantisierung und einer Entropiecodierung unterzogen werden. Anschließend werden die Transformationscodierungskoeffizienten zu einem Empfänger übertragen, bei dem das gesamte Codierungsverfahren in inverser Weise durchgeführt wird. Dadurch steht beim Empfänger nach Durchführung der Decodierung wieder direkt Information über die Bildpunkte zur Verfügung.

Bei den blockbasierten Bildcodierungsverfahren wird zwischen zwei unterschiedlichen Bildcodierungsmodi unterschieden.

Bei dem sogenannten Intra-Bildcodierungsmodus wird jeweils das gesamte Bild oder ein geigneter Teilausschnitt des Bildes (z.B. ein Bildblock) mit der gesamten, den Bildpunkten des Bildes zugeordneten Codierungsinformation codiert und übertragen. Es werden in diesem Modus sogenannte I-Bilder oder I-Bildblöcke codiert.

Bei dem sogenannten Inter-Bildcodierungsmodus wird jeweils nur die Differenzbildinformation zweier zeitlich aufeinanderfolgender Bilder codiert und übertragen. Es werden in diesem Modus sogenannte P-Bilder oder B-Bilder oder P-Bildblöcke oder B-Bildblöcke codiert.

Unter Codierungsinformation ist im weiteren Helligkeitsinformation (Luminazinformation) oder Farbinformation (Chrominanzinformation) zu verstehen, die den Bildpunkten des Bildes zugeordnet ist.

Verfahren zur sogenannten objektbasierten Bildcodierung sind aus [6] bekannt. Bei der objektbasierten Bildcodierung erfolgt eine Segmentierung eines Bildes entsprechend der in dem Bild vorkommenden Bildobjekte. Die Bildobjekte werden separat codiert. Bei diesen Verfahren werden ebenso Verfahren zur Bewegungsschätzung und Transformationscodierung eingesetzt.

Bei objektbasierten Bildcodierungsverfahren wird jedes Bildobjekt BO zunächst in Bildblöcke BB einer festen Größe, z.B. 8x8 Bildpunkte BP zerlegt. Nach der Zerlegung befindet sich ein Teil der resultierenden Bildblöcke vollständig innerhalb eines Bildobjekts BO, was in Figur 4 dargestellt ist. Das Bild B enthält mindestens ein Bildobjekt BO, das berandet wird mit einer Objektkante OK des Bildobjekts BO.

Bildblöcke BB, die zumindest einen Teil der Objektkante OK enthalten, werden im weiteren als Randbildblöcke RBB bezeichnet.

Bildblöcke BB, die sich nach der Zerlegung vollständig innerhalb eines Bildobjekts BO befinden, können in Anlehnung an die oben genannten blockbasierten Bildcodierungsverfahren mit einer gewöhnlichen blockbasierten diskreten Cosinus Transformation (DCT) transformationscodiert werden.

Die Randbildblöcke RBB müssen jedoch mit einem besonderen Verfahren codiert werden.

Für die Codierung der Randbildblöcke RBB existieren bisher zwei grundsätzliche Ansätze.

Aus [6] ist es bekannt, die Codierungsinformation der Bildpunkte des Bildobjekts BO innerhalb eines Randbildblocks RBB durch ein geeignetes Extrapolationsverfahren der Codierungsinformation auf die Fläche des vollständigen Randbildblocks RBB zu ergänzen. Diese Vorgehensweise wird als Padding bezeichnet. Die ergänzte Fläche wird anschließend mit einer gewöhnlichen 2-dimensionalen Diskreten Cosinus Transformation codiert.

Aus [8] ist eine adaptive Transformationscodierung unter Einsatz einer Karhunen-Loève Transformation (KLT) bekannt. Bei diesem Verfahren wird vor Anwendung der KLT auf die einzelnen zu transformierenden Codierungsinformationen der Gleichanteil der Codierungsinformationen subtrahiert und die KLT wird auf die subtrahierte Codierungsinformation jeweils eines Bildpunktes angewendet.

Alternativ ist es aus [6], [7] und [9] bekannt, daß das Bildobjekt BO getrennt nach Zeilen und Spalten transformiert wird. Diese Technik wird als formangepaßte Transformationscodierung, in dem Fall, daß eine DCT verwendet wird, als formangepaßte DCT bezeichnet (Shape Adaptive DCT, SA-DCT). Die dem Bildobjekt BO zugeordneten DCT-Koeffizienten werden derart bestimmt, daß die Bildpunkte BP eines Randbildblocks RBB, die nicht zu dem Bildobjekt BO gehören, ausgeblendet werden. Auf die verbleibenden Bildpunkte BP wird dann zunächst spaltenweise eine 1-dimensionale DCT angewendet, deren Länge der Zahl der verbleibenden Bildpunkte BP in der jeweiligen Spalte entspricht. Die resultierenden DCT-Koeffizienten werden horizontal ausgerichtet und anschließend einer weiteren 1-dimensionalen DCT in horizontaler Richtung mit entsprechender Länge unterzogen.

Die aus [7] bekannte Vorschrift der SA-DCT geht von einer Transformationsmatrix $\underline{DCT\text{-}N}$ mit folgendem Aufbau aus:

$$\underline{DCT - N}(p, k) = \gamma \cdot \cos\left[p \cdot \left(k + \frac{1}{2}\right) \cdot \frac{\pi}{N}\right], \quad k, p = 0 \rightarrow N - 1$$

Der Wert $\gamma = \frac{1}{\sqrt{2}}$ für den Fall p = 0 und $\gamma = 1$ für alle anderen Fälle.

Mit N wird eine Größe des zu transformierenden Bildvektors bezeichnet, in dem die transformierten Bildpunkte enthalten sind.

Mit $\underline{DCT\text{-}N}$ wird eine Transformationsmatrix der Größe N x N bezeichnet.

Mit p, k werden Indizes bezeichnet mit p, k $\in$ [0, N-1].

Nach der SA-DCT wird jede Spalte des zu transformierenden Bildblocks gemäß der Vorschrift

$$\underline{c}_j = 2 \cdot \frac{2}{N} \cdot \underline{DCT \text{-} N} \cdot \underline{x}_j$$

vertikal transformiert und danach wird die gleiche Vorschrift auf die resultierenden Daten in horizontaler Richtung angewendet.

Ein Nachteil der SA-DCT ist darin zu sehen, daß keiner der resultierenden Transformationskoeffizienten (spektrale Koeffizienten) den Gleichanteil der Codierungsinformation der Bildpunkte BP des Bildobjekts BO repräsentiert. Der Gleichanteil, der auch als DC-Koeffizient bezeichnet wird, enthält jedoch bei gewöhnlichen Bilddaten bereits den größten Anteil der Signalenergie und ist deshalb für eine effiziente Bildcodierung von besonderer Bedeutung.

Somit liegt der Erfindung das Problem zugrunde, Verfahren und Anordnungen zur Codierung und Decodierung digitalisierter Bilder anzugeben, mit denen eine effizientere Codierung und Decodierung möglich wird.

Das Problem wird durch das Verfahren gemäß Patentanspruch 1, durch das Verfahren gemäß Patentanspruch 6, durch die Vorrichtung gemäß Patentanspruch 11, durch die Vorrichtung gemäß Patentanspruch 16 sowie durch die computerlesbaren Speichermedien gemäß Patentanspruch 21 und Patentanspruch 22 gelöst.

Die Vorrichtungen können Universalrechner sein mit einem programmierbaren Mikroprozessor, der Prozessoreinheit. Die Codierung bzw. Decodierung der digitalisierten Bilder erfolgt in diesem Fall unter Verwendung eines Computerprogramms, das derart programmiert ist, daß die entsprechenden Verfahrensschritte von dem Rechner durchgeführt werden. Die im weiteren beschriebenen logischen Einheiten des Coders bzw. Decoders sind in diesem Fall z.B. als eigenständige Prozeduren des Computerprogramms ausgestaltet.

Die Vorrichtungen können auch spezielle Hardware-Bausteine, z.B. eine spezielle Computerkarte zur digitalen Bildverarbeitung sein, die jeweils einen speziellen Baustein für die im weiteren beschriebenen logischen Einheiten des Coders bzw. Decoders enthalten.

Ein Vorteil der Verfahren und der Vorrichtungen ist darin zu sehen, daß durch separate Ermittlung des Gleichanteils und Verminderung der Codierungsinformation der Bildpunkte des jeweiligen Bildblocks oder des Teils hiervon eine erhebliche Einsparung benötigter Übertragungskapazität für die Übertragung eines Bildes bzw. eine erhöhte Kompression der Bilddaten erreicht wird.

Ein weiterer Vorteil liegt darin, daß es durch diese Vorgehensweise ermöglicht wird, eine im weiteren beschriebene orthonormale Variante der SA-DCT einzusetzen. Dies führt zu einer weiter verbesserten Codiereffizienz, d.h. bei gleichbleibender Datenrate wird die Bildqualität erheblich erhöht.

Anschaulich kann die Erfindung darin gesehen werden, daß für einen Randbildblock der Gleichanteil der Codierungsinformation der in dem Randbildblock enthaltenen Bildpunkte separat ermittelt wird und von der Codierungsinformation der Bildpunkte des Randbildblocks abgezogen wird, wodurch eine erhöhte Codiereffizienz erreicht wird.

Vorteilhafte Weiterbildungen der Erfindung ergeben sich aus den abhängigen Ansprüchen.

In einer Weiterbildung des Verfahrens zur Codierung ist es vorteilhaft, die Transformationscodierung derart durchzuführen, daß die Signalenergie der Codierungsinformation der Bildpunkte im Ortsbereich in etwa gleich ist der Signalenergie der tranformierten Codierungsinformation der Bildpunkte im Frequenzbereich.

Dabei ist es vorteilhaft, Transformationskoeffizienten $\underline{c}_j$ aus Differenzwerten $\underline{d}_j$ der Codierungsinformation der Bildpunkte nach folgender Vorschrift zu bilden:

$$\underline{c}_j = \sqrt{\frac{2}{N}} \cdot \underline{DCT\text{-}N}(p, k) \cdot \underline{d}_j$$

wobei mit

- $\underline{d}_j$ die Differenzwerte zwischen der Codierungsinformation und dem Gleichanteil bezeichnet werden,
- N eine Größe eines zu transformierenden Bildvektors bezeichnet wird, in dem die Bildpunkte $\underline{x}_j$ enthalten sind,
- DCT-N eine Transformationsmatrix der Größe NxN bezeichnet wird,
- p, k Indizes bezeichnet werden mit p, k $\in$[0, N-1].

Durch die oben beschriebene orthonormale Variante der SA-DCT wird die Codiereffizienz erheblich gesteigert.

In einer Weiterbildung des Verfahrens zur Decodierung ist es entsprechend vorteilhaft, die inverse Transformationscodierung derart durchzuführen, daß die Signalenergie der Codierungsinformation der Bildpunkte im Ortsbereich in etwa gleich ist der Signalenergie der tranformierten Codierungsinformation der Bildpunkte im Frequenzbereich.

Dabei ist es vorteilhaft, Differenzwerte $\underline{d}_j$ aus den Transformationskoeffizienten $\underline{c}_j$ nach folgender Vorschrift zu bilden:

$$\underline{d}_j = \sqrt{\frac{2}{N}} \cdot (\underline{DCT\text{-}N}(p, k))^{-1} \cdot \underline{c}_j$$

wobei mit

- N eine Größe eines zu transformierenden Bildvektors bezeichnet wird, in dem die Bildpunkte $\underline{x}_j$ enthalten sind,
- DCT-N eine Transformationsmatrix der Größe NxN bezeichnet wird,
- p, k Indizes bezeichnet werden mit p, k $\in$[0, N-1],
- $(\bullet)^{-1}$ eine Inversion einer Matrix bezeichnet wird.

Die Verfahren eignen sich besonders für die Codierung von Bildblöcken, die eine Objektkante eines Bildobjekts enthalten, die im weiteren als Randbildblöcke bezeichnet werden.

In den Figuren ist ein bevorzugtes Ausführungsbeispiel der Erfindung dargestellt, welches im weiteren näher erläutert wird.

Es zeigen

Figur 1    ein Ablaufdiagramm, in dem die einzelnen Verfahrensschritte des Verfahrens zu Codierung und des Verfahrens zur Decodierung dargestellt sind;

Figur 2    eine Skizze einer Rechneranordnung mit zwei Rechnern, einer Kamera und einem Übertragungsmedium zur Aufnahme, Codierung, Übertragung und Decodierung von Bilddaten;

Figur 3    eine Skizze einer üblichen Anordnung zur blockbasierten Bildcodierung mit den üblicherweise eingesetzten logischen Einheiten;

Figur 4    symbolhaft eine Darstellung eines Bildes mit einem Bildobjekt und Bildblöcken und Randbildblöcken.

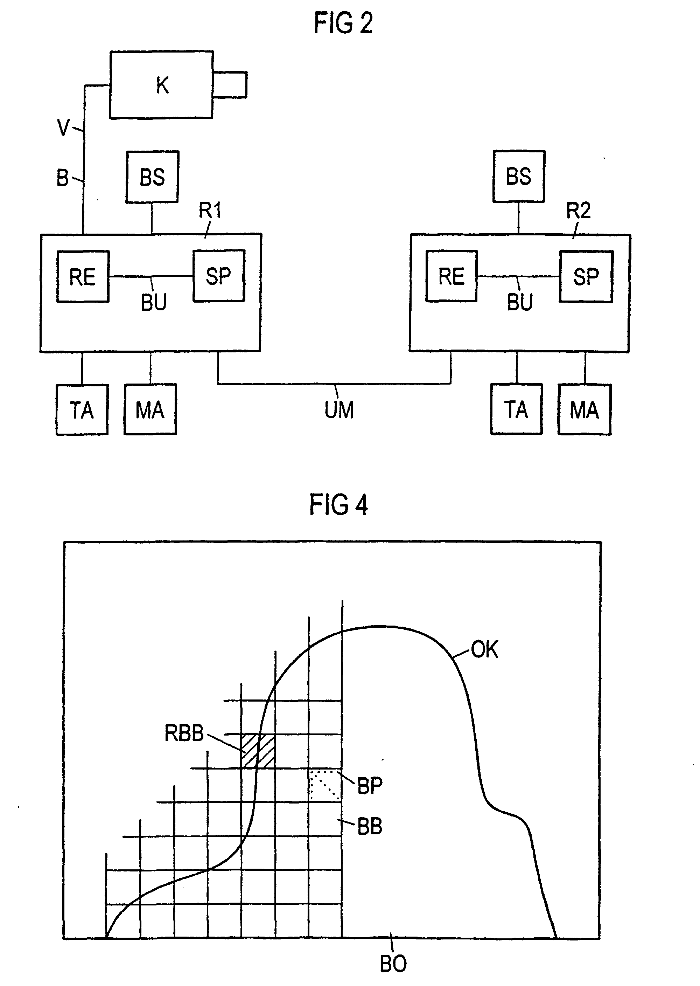

Figur 2 zeigt eine Kamera K, mit der eine Folge von Bildern B aufgenommen wird und einem ersten Rechner R1 über eine Verbindung V zugeführt wird.

In dem ersten Rechner R1 werden die Bilder der Folge von Bildern B digitalisiert und codiert gemäß dem in [6] beschriebenen Verfahren des zukünftigen MPEG4-Standards.

Der erste Rechner R1 ist über ein Übertragungsmedium UM, z.B. einem Kabel oder einer Funkübertragungsstrecke, mit einem zweiten Rechner R2 verbunden. Über das Übertragungsmedium UM werden die von dem ersten Rechner R1 codierten Bilddaten an den zweiten Rechner R2 übertragen und dort decodiert.

Der erste Rechner R1 und der zweite Rechner R2 weisen jeweils einen Speicher SP und eine Recheneinheit RE auf, die über einen Bus BU miteinander verbunden sind. Die Recheneinheit RE des ersten Rechners R1 ist derart ausgestaltet, daß die im weiteren erläuterten Verfahrensschritte zur Codierung der digitalisierten Bilder durchgeführt werden. Die Recheneinheit RE des zweiten Rechners R2 ist derart ausgestaltet, daß die empfangenen codierten Daten decodiert werden entsprechend dem MPEG2-Verfahren. Der erste Rechner R1 und der zweite Rechner R2 weisen ferner jeweils einen Bildschirm BS zur Darstellung der Bilder B sowie eine Tastatur TA und eine Maus MA zur Steuerung der Rechner R1, R2 auf.

Im Rahmen von MPEG4 erfolgt eine Segmentierung eines Bildes B entsprechend der in dem Bild B vorkommenden Bildobjekte BO (vgl. Figur 4). Die Bildobjekte BO werden separat codiert.

Zur Codierung eines Bildobjekts BO wird das Bildobjekt BO zunächst in Bildblöcke BB einer festen Größe, in diesem Fall 8x8 Bildpunkte BP zerlegt. Nach der Zerlegung befindet sich ein Teil der resultierenden Bildblöcke vollständig innerhalb eines Bildobjekts BO, was in Figur 4 dargestellt ist. Das Bild B enthält mindestens ein Bildobjekt BO, das berandet wird mit einer Objektkante OK des Bildobjekts BO.

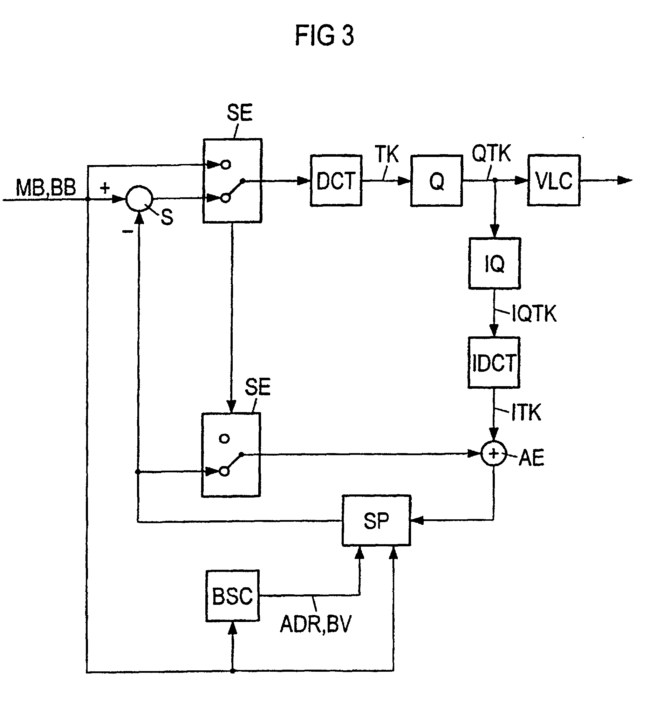

Bildblöcke BB, die sich nach der Zerlegung vollständig innerhalb des Bildobjekts BO befinden, können in Anlehnung an die oben genannten blockbasierten Bildcodierungsverfahren mit einer gewöhnlichen blockbasierten diskreten Cosinus Transformation (DCT) transformationscodiert werden (vgl. Figur 3).

Die Bildblöcke BB werden in einem Intra-Bildcodierungsmodus oder in einem Inter-Bildcodierungsmodus codiert. Zum Umschalten zwischen den Modi sind zwei Schaltereinheiten SE vorgesehen.

Zur Durchführung des Inter-Bildcodierungsmodus ist eine Subtraktionseinheit S vorgesehen, in der von der Luminanzinformation der Bildpunkte BP des Bildblocks BB Luminanzinformation von Bildpunkten eines im weiteren erläuterten prädizierten Bildblocks PBB abgezogen wird.

Ein sich durch die Differenzbildung ergebender Differenzbildblock DBB wird einer Einheit zur Transformationscodierung DCT zugeführt, in der auf den Differenzbildblock DBB eine diskrete Cosinus Transformation (DCT) zur Bildung von Transformationskoeffizienten TK angewendet wird. Die Transformationskoeffizienten TK werden in einer Quantisierungseinheit Q quantisiert QTK. Die quantisierten Transformationskoeffizienten QTK werden einer Einheit zur Entropiecodierung VLC zugeführt, in der eine sog. Run Length Codierung und/oder eine sog. variable Längencodierung (Variable Length Coding) durchgeführt wird.

Bei der Codierung werden die quantisierten Transformationskoeffizienten QTK ferner einer Einheit zur inversen Quantisierung IQ zugeführt, in der invers quantisierte Transformationskoeffizienten IQTK gebildet werden.

In einer Einheit zur inversen Transformationscodierung IDCT werden die ihr zugeführten invers quantisierte Transformationskoeffizienten IQTK invers transformiert. Es ergeben sich inverse Transformationskoeffizienten ITK, die einer Additionseinheit AE zugeführt werden.

Der Additionseinheit AE wird ferner der prädizierte Bildblock PBB zugeführt. Der prädizierte Bildblock PBB enthält prädizierte Transformationskoeffizienten, die zu den inversen Transformationskoeffizienten ITK addiert werden. Sich daraus ergebende rekonstruierte Transformationskoeffizienten RTK werden in einem Speicher SP gespeichert.

In dem Speicher SP wird jeweils mindestens ein zeitlich vorangegangenes rekonstruiertes Bild gespeichert. Das vorangegangenes Bild weist vorangegangene Bildblöcke mit den rekonstruierten Transformationskoeffizienten RTK auf, die vorangegangene Luminanzinformation vorangegangener Bildpunkte BP des vorangegangenen Bildes repräsentieren.

Das in dem Speicher SP gespeicherte Bild wird für eine Bewegungsschätzung, die in einer Einheit zur Bewegungsschätzung BSC durchgeführt wird, verwendet.

Die Bewegungsschätzung BSC erfolgt derart, daß für die Bildpunkte BP jeweils eines Bildblocks BB ein Vergleich der Luminanzinformation mit Luminanzinformation von Bildpunkten BP des vorangegangenen Bildes durchgeführt wird. In dem vorangegangenen Bild werden jeweils vorangegangene Bildpunkte verwendet, die in einen vorangegangenen Bildblock gruppiert werden.

Für den Bildblock BB wird eine absolute Differenz der Luminanzinformation der Bildpunkte BP, die in dem Bildblock BB enthalten sind, mit Luminanzinformation von Bildpunkten eines Gebiets in dem vorangegangenen Bild, welches die gleiche Form aufweist wie der Bildblock BB, gebildet. Die Differenz wird im weiteren als Fehlermaß bezeichnet.

Das Fehlermaß wird für einen Bildblock BB nach folgender Vorschrift gebildet:

$$F = \sum_{i=1}^{8} \sum_{j=1}^{8} \left| x_{ij} - y_{ij} \right|,$$

wobei mit

- i ein Zeilenindex zur eindeutigen Kennzeichnung einer Zeile innerhalb des Bildblocks BB,
- j ein Zeilenindex zur eindeutigen Kennzeichnung einer Spalte innerhalb des Bildblocks BB,
- $x_{ij}$ ein Luminanzwert, der einem sich an der durch i, j angegebenen Position befindenden Bildpunkt BP innerhalb des Bildblocks BB zugeordnet ist,
- $y_{ij}$ ein Luminanzwert, der einem sich an der durch i, j angegebenen Position befindenden vorangegangenen Bildpunkt BP innerhalb des Gebiets des vorangegangenen Bildes, das mit dem Bildblock BB verglichen wird, zugeordnet ist,

bezeichnet wird.

Das Fehlermaß wird für eine vorgebbare Anzahl von Gebieten innerhalb des vorangegangenen Bildes, dem sog. Suchbereich, gebildet.

Als Ergebnis der Bewegungsschätzung BSC wird das Gebiet des vorangegangenen Bildes B als prädizierter Bildblock PBB ausgewählt, für das das Fehlermaß minimal ist, da für dieses Gebiet die Übereinstimmung mit dem Bildblock BB optimal ist.

Ferner wird im Rahmen der Bewegungsschätzung die örtliche Verschiebung des Bildblocks BB zu dem prädizierten Bildblock PBB in dem vorangegangenen Bild ermittelt. Die Verschiebung wird im weiteren als Bewegungsvektor BV bezeichnet.

Im Rahmen der Bewegungsschätzung BSC wird jeweils zur eindeutigen Adressierung des Gebiets des vorangegangenen Bildes eine ADR dem Speicher SP zugeführt.

Der Bewegungsvektor BV wird nach vollendeter Bewegungsschätzung BSC in dem Speicher SP gespeichert.

Die Luminanzwerte der Bildpunkte des prädizierten Bildblocks PBB werden der Subtraktionseinheit SE zugeführt und von den Luminanzwerten der Bildpunkte BP des Bildblocks BB abgezogen.

Im Intra-Bildcodierungsmodus werden die Bildblöcke BB vollständig der DCT unterzogen, quantisiert und entropiecodiert. Eine Bewegungsschätzung BSC wird in diesem Modus nicht durchgeführt.

Die Randbildblöcke RBB müssen jedoch mit einem besonderen Verfahren codiert werden. Die Erfindung wird im weiteren für Randbildblöcke RBB und für den Intra-Bildcodierungsmodus beschrieben.

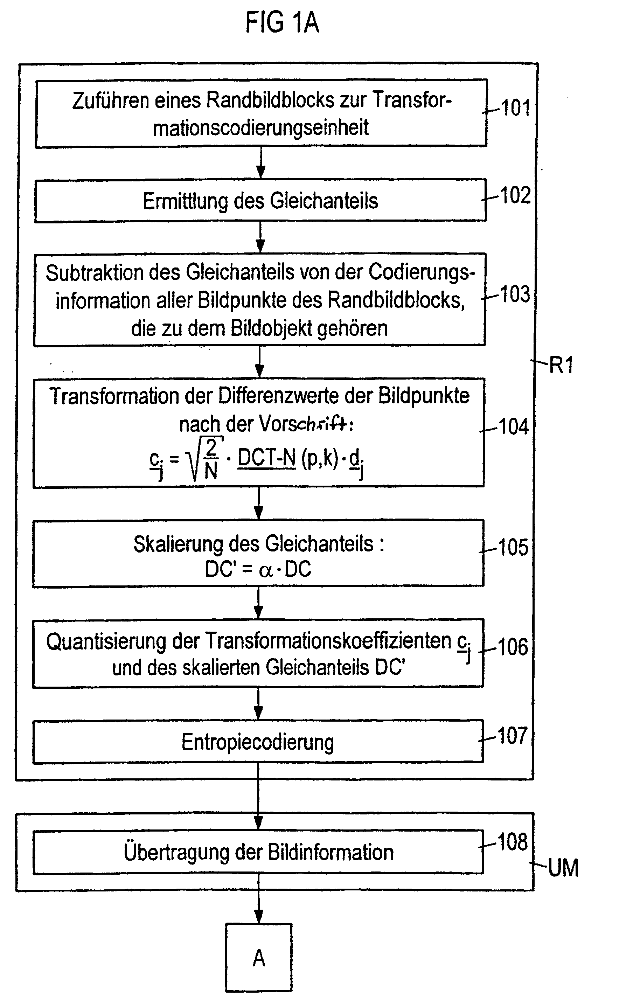

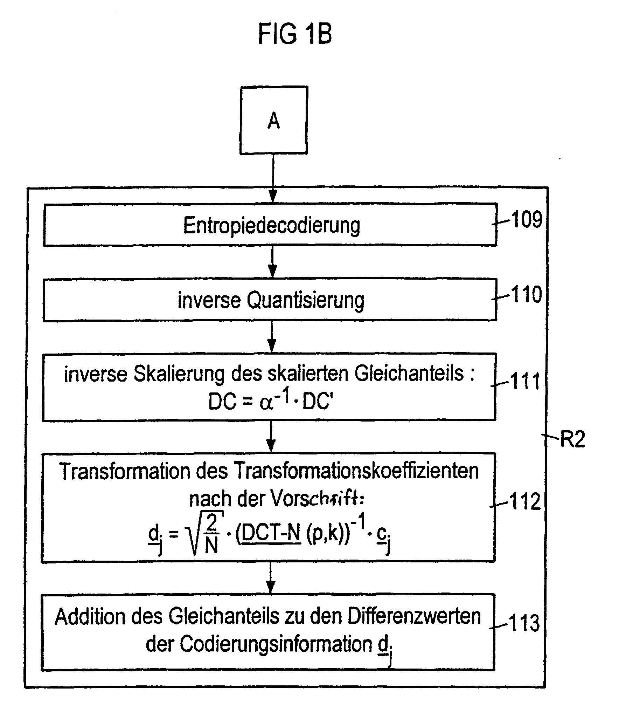

Figur 1 zeigt ein Ablaufdiagramm, in dem die einzelnen Schritte des Verfahrens dargestellt sind.

In einem ersten Schritt 101 wird ein Randbildblock RBB in dem Intra-Bildcodierungsmodus der Einheit zur Transformationscodierung DCT zugeführt.

In der Einheit zur Transformationscodierung DCT wird ein Gleichanteil DC der Codierungsinformation der Bildpunkte BP des Randbildblocks RBB ermittelt, die zu dem Bildobjekt BO gehören (Schritt 102). Der Gleichanteil DC wird nach folgender Vorschrift gebildet:

$$DC = \frac{1}{N} \cdot \sum_{i,j \in BO} f(i, j),$$

wobei mit

- N eine Anzahl der zu dem Bildobjekt BO gehörenden Bildpunkte BP des Randbildblocks RBB,
- f(i, j) der Wert der Codierungsinformation, die dem sich an der durch Indizes i, j angegebenen Position befindenden Bildpunkt BP zugeordnet ist,

bezeichnet wird.

In einem dritten Schritt wird der ermittelte Gleichanteil DC von der Codierungsinformation jedes Bildpunktes BP des Randbildblocks RBB, der zu dem Bildobjekt BO gehört, subtrahiert.

Es ergeben sich Differenzwerte d(i, j) der Codierungsinformation f(i, j) jeweils für einen Bildpunkt an der Position (i, j) innerhalb des Randbildblocks RBB nach folgender Vorschrift:

$$d(i, j) = f(i, j) - DC \qquad \forall \ (i, j) \in BO.$$

Die Differenzwerte d(i, j) werden einer Variante der SA-DCT unterzogen (Schritt 104). Zusammengefaßt zu einem Differenzvektor $\underline{d}_j$ ergibt sich folgende Vorschrift zur Bildung der Transformationskoeffizienten $\underline{c}_j$ aus dem Vektor

$\underline{d}_j$ der Differenzwerte d(i, j) der Codierungsinformation der Bildpunkte nach folgender Vorschrift:

$$\underline{c}_j = \sqrt{\frac{2}{N}} \cdot \underline{DCT - N}(p, k) \cdot \underline{d}_j$$

wobei mit

- N eine Größe eines zu transformierenden Bildvektors bezeichnet wird, in dem die Bildpunkte BP enthalten sind,
- DCT-N eine Transformationsmatrix der Größe NxN bezeichnet wird,
- p, k Indizes bezeichnet werden mit p, k $\in$[0, N-1].

Anschaulich bedeutet die Vorschrift zur Bildung der Transformationskoeffizienten $\underline{c}_j$, daß die Signalenergie der Codierungsinformation der Bildpunkte BP im Ortsbereich in etwa gleich ist der Signalenergie der transformierten Codierungsinformation der Bildpunkte BP im Frequenzbereich.

Der Gleichanteil DC wird mit einem vorgebbaren Faktor $\alpha$ zu einem skalierten Gleichanteil DC' multipliziert (Schritt 105) :

$$DC = \alpha \cdot DC.$$

Ein Wert für den Faktor $\alpha$ = sqrt(n) hat sich als vorteilhaft herausgestellt, wobei n die Anzahl der zum Bildobjekt BO gehörenden Bildpunkte BP im Randbildblock RBB ist.

Die Transformationskoeffizienten $\underline{c}_j$ und der skalierte Gleichanteil DC' werden in weiteren Schritten quantisiert (Schritt 106) und einer Entropiecodierung unterzogen (Schritt 107).

Die codierte Bildinformation wird von dem ersten Rechner R1 zu dem zweiten Rechner R2 über das Übertragungsmedium UM übertragen (Schritt 108).

In dem zweiten Rechner R2 werden die codierten Bilddaten empfangen und es wird eine Bilddecodierung mit folgenden Verfahrensschritten durchgeführt für die Randbildblöcke RBB. Die übrigen Bildblöcke werden mit dem üblichen inversen Verfahren zur Codierung decodiert, d.h. es wird eine Entropiedecodierung, eine inverse Quantisierung und eine inverse Transformationscodierung und evtl. eine Bewegungskompensation durchgeführt.

Jeder Randbildblock RBB wird ebenfalls einer Entropiedecodierung (Schritt 109) und einer inversen Quantisierung (Schritt 110) unterzogen.

Aus dem mit übertragenen skalierten Gleichanteil DC' wird durch Multiplikation mit dem Kehrwert $\alpha^{-1}$ des Faktors $\alpha$ der Gleichanteil DC rekonstruiert (Schritt 111).

Aus den invers quantisierten Transformationskoeffizienten $\underline{c}_j$ werden in einem weiteren Schritt 112 die Differenzwerte d(i, j) ermittelt. Zusammengefaßt zu einem Differenzvektor $\underline{d}_j$ ergibt sich folgende Vorschrift zur Bildung des Vektors $\underline{d}_j$ der Differenzwerte d(i, j) der Codierungsinformation der Bildpunkte aus den Transformationskoeffizienten $\underline{c}_j$ nach folgender Vorschrift:

$$\underline{d}_j = \sqrt{\frac{2}{N}} \cdot (\underline{DCT - N}(p, k))^{-1} \cdot \underline{c}_j.$$

In einem letzten Schritt 113 wird der Gleichanteil DC wieder zu den Differenzwerten d(i, j) der Codierungsinformation der Bildpunkte hinzuaddiert, womit die ürsprüngliche Codierungsinformation der Bildpunkte rekonstruiert wurde und somit der Randbildblock decodiert ist.

Im weiteren werden einige Alternativen zu dem oben beschriebenen Ausführungsbeispiel aufgezeigt.

Die Erfindung ist nicht beschränkt auf das Verfahren gemäß MPEG-4. Sie ist für jedes objektbasierte Bildcodierungsverfahren vorteilhaft einsetzbar, da bei diesen Verfahren immer die Problematik der Codierung bzw. Decodierung von Randbildblöcken auftaucht, die durch die Erfindung äußerst vorteilhaft gelöst wird.

Die Erfindung kann für jede blockbasierte oder objektbasirte Transformationscodierung verwendet werden, die selbst keinen Gleichanteil liefert, z.B. die diskreste Sinustransformation (DST) oder auch eine Wavelet-Transformation.

Die Erfindung ist nicht auf die oben beschriebene Variante der SA-DCT beschränkt. Auch die SA-DCT kann unverändert im Rahmen der Erfindung eingesetzt werden.

Anschaulich kann die Erfindung darin gesehen werden, daß für einen Randbildblock der Gleichanteil der

**EP 0 981 909 B1**

Codierungsinformation der in dem Randbildblock enthaltenen Bildpunkte separat ermittelt wird und von der Codierungsinformation der Bildpunkte des Randbildblocks abgezogen wird, wodurch eine erhöhte Codiereffizienz erreicht wird.

Im Rahmen dieses Dokumentes wurden folgende Veröffentlichungen zitiert:

[1] D. Le Gall, The Video Compression Standard for Multimedia Applications, Communications of the ACM, Vol. 34, No. 4, S. 47-58, April 1991, 1991).

[2] G. Wallace, The JPEG Still Picture Compression Standard, Communications of the ACM, Vol. 34, No. 4, S. 31-44, April 1991

[3] Ming Liou, Overview of the px64 kbit/s Video Coding Standard, Communications of the ACM, Vol. 34, No. 4, S. 60-63, April 1991

[4] ITU-T Rec. H.263, Video Coding for Low Bitrate Communication, März 1997, S. 1 - 25

[5] A. N. Netravali und J.D. Robbins, Motion Compensated Television Coding: Part I, Bell System Technical Journal, Vol. 58, S. 631-690, März 1979)

[6] ISO/IEC JTC1/SC29/WG11, MPEG-4 Video Verification Model Version 5.0 Doc. 1469, S. 55 - 59, Nov. 1996

[7] T. Sikora und B. Makai, Shape Adaptive DCT for Generic Coding of Video, IEEE Transactions on Circuits and Systems for Video Technology, Vol. 5, S. 59 - 62, Feb. 1995

[8] Susumu Itoh et al., "Adaptive Tranform Coding of Images based on Variable-Shape-Blocks", Signal Processing Theories and Applications, Brussels, Aug. 24-27, 1992, Bd. 3, Nr. Conf. 6, 24. August 1992, Seiten 1251-1254, XP000356468

[9] MPEG-4 Video Verification Model Version 7.0, ISO/IEC JTC1/SC29/WG11, MPEG97/N1642, XP002144264, pages 56-60, April 1997

**Patentansprüche**

1.  Verfahren zur Codierung eines digitalisierten Bildes, das mindestens ein Bildobjekt mit einer beliebigen Anzahl Bildpunkte aufweist, denen Codierungsinformation zugeordnet ist,

    -   bei dem die Bildpunkte zu Bildblöcken gruppiert werden,
    -   bei dem für mindestens einen Teil eines Bildblocks ein Gleichanteil der Codierungsinformation der in dem mindestens einen Teil des Bildblocks enthaltenen Bildpunkte ermittelt wird,
    -   bei dem der Gleichanteil von der Codierungsinformation jedes Bildpunktes des mindestens einen Teils des Bildblocks abgezogen wird, und
    -   bei dem die um den Gleichanteil reduzierte Codierungsinformation der Bildpunkte des mindestens einen Teils des Bildblocks einer formangepassten Transformationscodierung (SA-DCT) unterzogen wird,

    **dadurch gekennzeichnet, dass**
    die Reduktion der Codierungsinformation um den Gleichanteil nur auf Bildblöcke angewendet wird, die eine Kante des Bildobjekts enthalten.

2.  Verfahren nach Anspruch 1,
    bei dem die Transformationscodierung derart erfolgt, dass eine Signalenergie der Codierungsinformation der Bildpunkte im Ortsbereich in etwa gleich ist einer Signalenergie der transformierten Codierungsinformation der Bildpunkte im Frequenzbereich.

3.  Verfahren nach Anspruch 1 oder 2,
    bei dem Transformationskoeffizienten $c_j$ aus Differenzwerten $d_j$ der Codierungsinformation der Bildpunkte nach folgender Vorschrift gebildet werden:

$$\underline{c}_j = \sqrt{\frac{2}{N}} \cdot \underline{DCT \text{ - } N}(p, k) \cdot \underline{d}_j$$

wobei mit

- N eine Größe eines zu transformierenden Bildvektors bezeichnet wird, in dem die Bildpunkte enthalten sind,
- DCT-N eine Transformationsmatrix der Größe NxN bezeichnet wird,
- p, k Indizes bezeichnet werden mit p, k $\in$[0, N-1].

4. Verfahren nach einem der vorangegangenen Ansprüche, bei dem die Reduktion der Codierungsinformation um den Gleichanteil nur auf Bildblöcke angewendet wird, die im Intra-Bildcodierungsmodus codiert werden.

5. Verfahren nach einem der vorangegangenen Ansprüche, bei dem der Gleichanteil skaliert wird.

6. Verfahren zur Decodierung eines digitalisierten Bildes, das mindestens ein Bildobjekt mit einer beliebigen Anzahl Bildpunkte aufweist, denen formangepasst transformationscodierte Codierungsinformation zugeordnet ist, wobei die Bildpunkte zu Bildblöcken gruppiert sind und mindestens einem Bildblock ein Gleichanteil der Codierungsinformation der in dem Bildblock enthaltenen Bildpunkte zugeordnet ist,

- bei dem die formangepasst transformationscodierte Codierungsinformation der Bildpunkte des mindestens einen Teils des Bildblocks, dem ein Gleichanteil zugeordnet ist, einer inversen formangepassten Transformationscodierung unterzogen wird, und
- bei dem der Gleichanteil der Codierungsinformation jedes Bildpunktes des mindestens einen Teils des Bildblocks hinzuaddiert wird,

   **dadurch gekennzeichnet, dass**
   die Addition des Gleichanteils zu der Codierungsinformation nur auf Bildblöcke angewendet wird, die eine Kante des Bildobjekts enthalten.

7. Verfahren nach Anspruch 6,
bei dem die inverse Transformationscodierung derart erfolgt, dass eine Signalenergie der Codierungsinformation der Bildpunkte im Ortsbereich in etwa gleich ist einer Signalenergie der transformierten Codierungsinformation der Bildpunkte im Frequenzbereich.

8. Verfahren nach Anspruch 6 oder 7,
bei dem Differenzwerte $\underline{d}_j$ aus den Transformationskoeffizienten $\underline{c}_j$ nach folgender Vorschrift gebildet werden:

$$\underline{d}_j = \sqrt{\frac{2}{N}} \cdot (\underline{DCT \text{ - } N}(p, k))^{-1} \cdot \underline{c}_j$$

wobei mit

- N eine Größe eines zu transformierenden Bildvektors bezeichnet wird, in dem die Bildpunkte enthalten sind,
- DCT-N eine Transformationsmatrix der Größe NxN bezeichnet wird,
- p, k Indizes bezeichnet werden mit p, k $\in$[0, N-1],
- $(\bullet)^{-1}$ eine Inversion einer Matrix bezeichnet wird.

9. Verfahren nach einem der Ansprüche 6 bis 8,
bei dem die Reduktion der Codierungsinformation um den Gleichanteil nur auf Bildblöcke angewendet wird, die im Intra-Bildcodierungsmodus codiert werden.

10. Verfahren nach einem der Ansprüche 6 bis 9,
bei dem der Gleichanteil skaliert wird.

11. Vorrichtung zur Codierung eines digitalisierten Bildes, das mindestens ein Bildobjekt mit einer beliebigen Anzahl Bildpunkte aufweist, denen Codierungsinformation zugeordnet ist,

mit einer Prozessoreinheit, die derart eingerichtet ist, dass

- die Bildpunkte zu Bildblöcken gruppiert werden,
- für mindestens einen Teil eines Bildblocks ein Gleichanteil der Codierungsinformation der in dem mindestens einen Teil des Bildblocks enthaltenen Bildpunkte ermittelt wird,
- der Gleichanteil von der Codierungsinformation jedes Bildpunktes des mindestens einen Teils des Bildblocks abgezogen wird, und
- die um den Gleichanteil reduzierte Codierungsinformation der Bildpunkte des mindestens einen Teils des Bildblocks einer formangepassten Transformationscodierung (SA-DCT) unterzogen wird,

**dadurch gekennzeichnet, dass**
die Prozessoreinheit derart eingerichtet ist, dass die Reduktion der Codierungsinformation um den Gleichanteil nur auf Bildblöcke angewendet wird, die eine Kante des Bildobjekts enthalten (Randbildblöcke).

**12.** Vorrichtung nach Anspruch 11,
bei der die Prozessoreinheit derart eingerichtet ist, dass die Transformationscodierung derart erfolgt, dass eine Signalenergie der Codierungsinformation der Bildpunkte im Ortsbereich in etwa gleich ist einer Signalenergie der transformierten Codierungsinformation der Bildpunkte im Frequenzbereich.

**13.** Vorrichtung nach Anspruch 11 oder 12,
bei der die Prozessoreinheit derart eingerichtet ist, daß Transformationskoeffizienten $\underline{c}_j$ aus Differenzwerten $\underline{d}_j$ der Codierungsinformation der Bildpunkte nach folgender Vorschrift gebildet werden:

$$\underline{c}_j = \sqrt{\frac{2}{N}} \cdot \underline{DCT - N}(p, k) \cdot \underline{d}_j$$

wobei mit

- N eine Größe eines zu transformierenden Bildvektors bezeichnet wird, in dem die Bildpunkte enthalten sind,
- DCT-N eine Transformationsmatrix der Größe NxN bezeichnet wird,
- p, k Indizes bezeichnet werden mit p, k $\in$[0, N-1].

**14.** Vorrichtung nach einem der Ansprüche 11 bis 13,
bei der die Prozessoreinheit derart eingerichtet ist, dass die Reduktion der Codierungsinformation um den Gleichanteil nur auf Bildblöcke angewendet wird, die im Intra-Bildcodierungsmodus codiert werden.

**15.** Vorrichtung nach einem der Ansprüche 11 bis 14,
bei der die Prozessoreinheit derart eingerichtet ist, dass der Gleichanteil skaliert wird.

**16.** Vorrichtung zur Decodierung eines digitalisierten Bildes, das mindestens ein Bildobjekt mit einer beliebigen Anzahl Bildpunkte aufweist, denen formangepasst transformationscodierte Codierungsinformation zugeordnet ist, wobei die Bildpunkte zu Bildblöcken gruppiert sind und mindestens einem Bildblock ein Gleichanteil der Codierungsinformation der in dem Bildblock enthaltenen Bildpunkte zugeordnet ist,
mit einer Prozessoreinheit, die derart eingerichtet ist, dass

- die formangepasst transformationscodierte Codierungsinformation der Bildpunkte des mindestens einen Teils des Bildblocks, dem ein Gleichanteil zugeordnet ist, einer inversen formangepassten Transformationscodierung unterzogen wird, und
- der Gleichanteil der Codierungsinformation jedes Bildpunktes des mindestens einen Teils des Bildblocks hinzuaddiert wird,

**dadurch gekennzeichnet, dass**
die Prozessoreinheit derart eingerichtet ist, dass die Addition des Gleichanteils zu der Codierungsinformation nur auf Bildblöcke angewendet wird, die eine Kante des Bildobjekts enthalten.

**17.** Vorrichtung nach Anspruch 16,
bei der die Prozessoreinheit derart eingerichtet ist, dass die inverse Transformationscodierung derart erfolgt, dass eine Signalenergie der Codierungsinformation der Bildpunkte im Ortsbereich in etwa gleich ist einer Signalenergie der transformierten Codierungsinformation der Bildpunkte im Frequenzbereich.

**18.** Vorrichtung nach Anspruch 16 oder 17,
bei der die Prozessoreinheit derart eingerichtet ist, dass Differenzwerte $\underline{d}_j$ aus den Transformationskoeffizienten $\underline{c}_j$ nach folgender Vorschrift gebildet werden:

$$\underline{d}_j = \sqrt{\frac{2}{N}} \cdot (\underline{DCT - N}(p, k))^{-1} \cdot \underline{c}_j$$

wobei mit

- N eine Größe eines zu transformierenden Bildvektors bezeichnet wird, in dem die Bildpunkte enthalten sind,
- DCT-N eine Transformationsmatrix der Größe NxN bezeichnet wird,
- p, k Indizes bezeichnet werden mit p, k $\in$[0, N-1],
- $(\bullet)^{-1}$ eine Inversion einer Matrix bezeichnet wird.

**19.** Vorrichtung nach einem der Ansprüche 16 bis 18,
bei der die Prozessoreinheit derart eingerichtet ist, dass die Reduktion der Codierungsinformation um den Gleichanteil nur auf Bildblöcke angewendet wird, die im Intra-Bildcodierungsmodus codiert werden.

**20.** Vorrichtung nach einem der Ansprüche 16 bis 19,
bei der die Prozessoreinheit derart eingerichtet ist, dass der Gleichanteil skaliert wird.

**21.** Computerlesbares Speichermedium, auf dem ein Programm gespeichert ist, das, wenn es in einen Speicher des Computers geladen worden ist, dem Computer es ermöglicht, folgende Verfahrensschritte durchzuführen zur Codierung eines digitalisierten Bildes, das mindestens ein Bildobjekt mit einer beliebigen Anzahl Bildpunkte aufweist, denen eine Codierungsinformation zugeordnet ist:

- Die Bildpunkte werden zu Bildblöcken gruppiert,
- für mindestens einen Teil eines Bildblocks wird ein Gleichanteil der Codierungsinformation der in dem mindestens einen Teil des Bildblocks enthaltenen Bildpunkte ermittelt,
- der Gleichanteil von der Codierungsinformation jedes Bildpunktes des mindestens einen Teils des Bildblocks wird abgezogen, und
- die um den Gleichanteil reduzierte Codierungsinformation der Bildpunkte des mindestens einen Teils des Bildblocks wird einer formangepassten Transformationscodierung (SA-DCT) unterzogen,
- **dadurch gekennzeichnet, dass**
die Reduktion der Codierungsinformation um den Gleichanteil nur auf Bildblöcke angewendet wird, die eine Kante des Bildobjekts enthalten.

**22.** Computerlesbares Speichermedium, auf dem ein Programm gespeichert ist, das, wenn es in einen Speicher des Computers geladen worden ist, dem Computer es ermöglicht, folgende Verfahrensschritte durchzuführen zur Decodierung eines digitalisierten Bildes, das mindestens ein Bildobjekt mit einer beliebigen Anzahl Bildpunkte aufweist, denen formangepasst transformationscodierte Codierungsinformation zugeordnet ist,
wobei die

- Bildpunkte zu Bildblöcken gruppiert sind und
- mindestens einem Bildblock ein Gleichanteil der Codierungsinformation der in dem Bildblock enthaltenen Bildpunkte zugeordnet ist:
- die formangepasst transformationscodierte Codierungsinformation der Bildpunkte des mindestens einen Teils des Bildblocks, dem ein Gleichanteil zugeordnet ist, wird einer inversen formangepassten Transformationscodierung unterzogen, und
- der Gleichanteil der Codierungsinformation wird jedem Bildpunkt des mindestens einen Teils des Bildblocks hinzuaddiert,

**dadurch gekennzeichnet, dass**
die Addition des Gleichanteils zu der Codierungsinformation nur auf Bildblöcke angewendet wird, die eine Kante des Bildobjekts enthalten.

**Claims**

1. Method for the coding of a digitized picture which has at least one picture object having any desired number of pixels which are assigned coding information,

   - in which the pixels are grouped into picture blocks,
   - in which for at least one part of a picture block, a DC component of the coding information of the pixels contained in the at least one part of the picture block is determined,
   - in which the DC component is subtracted from the coding information of each pixel of the at least one part of the picture block, and
   - in which the coding information of the pixels of the at least one part of the picture block which is reduced by the DC component is subjected to a shape adapted transform coding (SA-DCT),

      **characterized in that**
      the reduction of the coding information by the DC component is applied only to picture blocks which contain an edge of the picture object.

2. Method according to Claim 1, in which the transform coding is effected in such a way that a signal energy of the coding information of the pixels in the space domain is approximately identical to a signal energy of the transformed coding information of the pixels in the frequency domain.

3. Method according to Claim 1 or 2,
   in which transform coefficients $\underline{c}_j$ are formed from difference values $\underline{d}_j$ of the coding information of the pixels according to the following specification:

$$\underline{c}_j = \sqrt{\frac{2}{N}} \cdot \underline{\text{DCT - N}}(p, k) \cdot \underline{d}_j$$

   where

   - N designates a magnitude of a picture vector which is to be transformed and in which the pixels are contained,
   - DCT-N designates a transform matrix having the size N×N,
   - p, k designate indices, where p, k ∈ [0, N-1].

4. Method according to one of the preceding claims,
   in which the reduction of the coding information by the DC component is applied only to picture blocks which are coded in the intracoding mode.

5. Method according to one of the preceding claims,
   in which the DC component is scaled.

6. Method for the decoding of a digitized picture which has at least one picture object having any desired number of pixels which are assigned shape-adapted transform-coded coding information, the pixels being grouped into picture blocks and at least one picture block being assigned a DC component of the coding information of the pixels contained in the picture block,

   - in which the shape-adapted transform-coded coding information of the pixels of the at least one part of the picture block which is assigned a DC component is subjected to an inverse shape-adapted transform coding, and
   - in which the DC component is added to the coding information of each pixel of the at least one part of the picture block,

      **characterized in that**
      the addition of the DC component to the coding information is applied only to picture blocks which contain an edge of the picture object.

7. Method according to Claim 6,
in which the inverse transform coding is effected in such a way that a signal energy of the coding information of the pixels in the space domain is approximately identical to a signal energy of the transformed coding information of the pixels in the frequency domain.

8. Method according to Claim 6 or 7,
in which difference values $\underline{d}_j$ are formed from the transform coefficients $\underline{c}_j$ according to the following specification:

$$\underline{d}_j = \sqrt{\frac{2}{N}} \cdot (\underline{DCT - N}(p, k))^{-1} \cdot \underline{c}_j$$

where

- N designates a magnitude of a picture vector which is to be transformed and in which the pixels are contained,
- DCT-N designates a transform matrix having the size N×N,
- p, k designate indices, where p, k $\in$ [0, N-1],
- $(\cdot)^{-1}$ designates an inversion of a matrix.

9. Method according to one of Claims 6 to 8,
in which the reduction of the coding information by the DC component is applied only to picture blocks which are coded in the intracoding mode.

10. Method according to one of Claims 6 to 9,
in which the DC component is scaled.

11. Apparatus for the coding of a digitized picture which has at least one picture object having any desired number of pixels which are assigned coding information,
having a processor unit which is set up in such a way that

- the pixels are grouped into picture blocks,
- for at least one part of a picture block, a DC component of the coding information of the pixels contained in the at least one part of the picture block is determined,
- the DC component is subtracted from the coding information of each pixel of the at least one part of the picture block, and
- the coding information of the pixels of the at least one part of the picture block which is reduced by the DC component is subjected to a shape-adapted transform coding (SA-DCT),

   **characterized in that**
   the processor unit is set up in such a way that the reduction of the coding information by the DC component is applied only to picture blocks which contain an edge of the picture object (edge picture blocks).

12. Apparatus according to Claim 11,
in which the processor unit is set up in such a way that the transform coding is effected in such a way that a signal energy of the coding information of the pixels in the space domain is approximately identical to a signal energy of the transformed coding information of the pixels in the frequency domain.

13. Apparatus according to Claim 11 or 12,
in which the processor unit is set up in such a way that transform coefficients $\underline{c}_j$ are formed from difference values $\underline{d}_j$ of the coding information of the pixels according to the following specification:

$$\underline{c}_j = \sqrt{\frac{2}{N}} \cdot \underline{DCT\text{-}N}(p, k) \cdot \underline{d}_j$$

where

- N designates a magnitude of a picture vector which is to be transformed and in which the pixels are contained,
- DCT-N designates a transform matrix having the size N×N,
- p, k designate indices, where p, k ∈ [0, N-1].

**14.** Apparatus according to one of Claims 11 to 13,
in which the processor unit is set up in such a way that the reduction of the coding information by the DC component is applied only to picture blocks which are coded in the intracoding mode.

**15.** Apparatus according to one of Claims 11 to 14,
in which the processor unit is set up in such a way that the DC component is scaled.

**16.** Apparatus for the decoding of a digitized picture which has at least one picture object having any desired number of pixels which are assigned shape-adapted transform-coded coding information, the pixels being grouped into picture blocks and at least one picture block being assigned a DC component of the coding information of the pixels contained in the picture block,
having a processor unit which is setup in such a way that

- the shape-adapted transform-coded coding information of the pixels of the at least one part of the picture block which is assigned a DC component is subjected to an inverse shape-adapted transform coding,
- the DC component is added to the coding information of each pixel of the at least one part of the picture block,

    **characterized in that**
    the processor unit is set up in such a way that the addition of the DC component to the coding information is applied only to picture blocks which contain an edge of the picture object.

**17.** Apparatus according to Claim 16,
in which the processor unit is set up in such a way that the inverse transform coding is effected in such a way that a signal energy of the coding information of the pixels in the space domain is approximately identical to a signal energy of the transformed coding information of the pixels in the frequency domain.

**18.** Apparatus according to Claim 16 or 17,
in which the processor unit is set up in such a way that difference values $\underline{d}_j$ are formed from the transform coefficients $\underline{c}_j$ according to the following specification:

$$\underline{d}_j = \sqrt{\frac{2}{N}} \cdot \left(\underline{DCT \text{-} N}(p, k)\right)^{-1} \cdot \underline{c}_j$$

where

- N designates a magnitude of a picture vector which is to be transformed and in which the pixels are contained, size N×N,
- p, k designate indices, where p, k ∈ [0, N-1],
- (•)⁻¹ designates an inversion of a matrix.

**19.** Apparatus according to one of Claims 16 to 18,
in which the processor unit is set up in such a way that the reduction of the coding information by the DC component is applied only to picture blocks which are coded in the intracoding mode.

**20.** Apparatus according to one of Claims 16 to 19,
in which the processor unit is set up in such a way that the DC component is scaled.

**21.** Computer-readable storage medium on which a program is stored which, when it has been loaded into a memory of the computer, enables the computer to carry out the following method steps for the coding of a digitized picture which has at least one picture object having any desired number of pixels which are assigned coding information:

- the pixels are grouped into picture blocks,
- for at least one part of a picture block, a DC component of the coding information of the pixels contained in the at least one part of the picture block is determined,

- the DC component is subtracted from the coding information of each pixel of the at least one part of the picture block, and
- the coding information of the pixels of the at least one part of the picture block which is reduced by the DC component is subjected to a shape-adapted transform coding (SA-DCT),

   **characterized in that**
   the reduction of the coding information by the DC component is applied only to picture blocks which contain an edge of the picture object.

22. Computer-readable storage medium on which a program is stored which, when it has been loaded into a memory of the computer, enables the computer to carry out the following method steps for the decoding of a digitized picture which has at least one picture object having any desired number of pixels which are assigned shape-adapted transform-coded coding information

- the pixels being grouped into the picture blocks and
- at least one picture block being assigned a DC component of the coding information of the pixels contained in the picture block:
- the shape-adapted transform-coded coding information of the pixels of the at least one part of the picture block which is assigned a DC component is subjected to an inverse shape-adapted transform coding, and
- the DC component is added to the coding information of each pixel of the at least one part of the picture block,

   **characterized in that**
   the addition of the DC component to the coding information is applied only to picture blocks which contain an edge of the picture object.


**Revendications**

1. Procédé de codage d'une image numérisée qui présente au moins un objet d'image avec un nombre quelconque de points d'image auxquels une information de codage est associée,

- dans lequel les points d'image sont regroupés en blocs d'image,
- dans lequel, pour au moins une partie d'un bloc d'image, une partie constante de l'information de codage des points d'image contenus dans au moins une partie du bloc d'image est déterminée,
- dans lequel la partie constante est extraite de l'information de codage de chaque point d'image de l'au moins une partie du bloc d'image, et
- dans lequel l'information de codage, réduite de la partie constante, des points d'image de l'au moins une partie du bloc d'image, subit un codage par transformation adaptée à la forme (SA-DCT),

   **caractérisé en ce que**
   la réduction de l'information de codage de la partie constante n'est appliquée que sur les blocs d'image qui contiennent un bord de l'objet d'image.

2. Procédé selon la revendication 1, dans lequel le codage de transformation s'effectue de telle sorte que l'énergie du signal de l'information de codage des points d'image dans la zone locale est sensiblement égale à l'énergie du signal de l'information de codage des points d'image transformée dans le domaine des fréquences.

3. Procédé selon la revendication 1 ou 2, dans lequel les coefficients de transformation $\underline{c}_j$ sont formés à partir de valeurs de différence $\underline{d}_j$ de l'information de codage de points d'image, selon l'équation ci-dessous:

$$\underline{c}_j = \sqrt{\frac{2}{N}} \cdot \underline{DCT \cdot N}(p, k) \cdot \underline{d}_j$$

dans laquelle

- N représente la taille d'un vecteur d'image à transformer qui contient les points d'image,

- DCT-N désigne une matrice de transformation de taille NxN, et
- p, k désignent des indices, avec p, k $\in$ [0, N-1].

**4.** Procédé selon l'une des revendications précédentes, dans lequel la réduction de l'information de codage de la partie constante n'est appliquée que sur les blocs d'image qui sont codés en mode de codage d'image intra.

**5.** Procédé selon l'une de revendications précédentes, dans lequel la partie constante est mise à l'échelle.

**6.** Procédé de décodage d'une image numérisée qui contient au moins un objet d'image qui présente un nombre quelconque de points d'image auquel une information de codage codée par transformation avec adaptation de forme est associée, les points d'image étant regroupés en blocs d'image et une partie constante de l'information de codage des points d'image contenues dans le bloc d'image étant associée à au moins un bloc d'image,

- dans lequel l'information de codage codée par transformation avec adaptation de forme des points d'image de l'au moins une partie du bloc d'image auquel une partie constante est associée subit un codage par transformation inverse adaptée à la forme, et
- dans lequel la partie constante de l'information de codage de chaque point d'image de l'au moins une partie du bloc d'image, est ajoutée,

**caractérisé en ce que**
l'addition de la partie constante à l'information de codage n'est appliquée que sur les blocs d'image qui contiennent un bord de l'objet d'image.

**7.** Procédé selon la revendication 6, dans lequel le codage de transformation inverse est effectué de telle sorte que l'énergie du signal del'information de codage des points d'image dans la zone locale est sensiblement égale à l'énergie du signal de l'information de codage des points d'image transformés dans le domaine des fréquences.

**8.** Procédé selon la revendication 6 ou 7, dans lequel des valeurs de différence $\underline{d}_j$ sont formées à partir des coefficients de transformation $\underline{c}_j$ selon l'équation ci-dessous:

$$\underline{d}_j = \sqrt{\frac{2}{N}} \cdot (\underline{DCT - N}(p, k))^{-1} \cdot \underline{c}_j$$

dans laquelle:

- N représente la taille d'un vecteur d'image à transformer qui contient les points d'image,
- DCT-N représente une matrice de transformation de taille NxN,
- p, k représentent des indices, avec p, k $\in$ [0, N-1],
- $(\cdot)^{-1}$ représente l'inversion d'une matrice.

**9.** Procédé selon l'une des revendications 6 à 8, dans lequel la réduction de l'information de codage de la partie constante est appliquée uniquement sur les blocs d'image qui sont codés en mode de codage d'image intra.

**10.** Procédé selon l'une des revendications 6 à 9, dans lequel la partie constante est mise à l'échelle.

**11.** Dispositif de codage d'une image numérisée qui contient au moins un objet d'image qui présente un nombre quelconque de points d'image auxquels une information de codage est associée,
comprenant une unité de processeur qui est agencée de telle sorte que:

- les points d'image sont regroupés en blocs d'image,
- pour au moins une partie d'un bloc d'image, une partie constante de l'information de codage des points d'image contenus dans l'au moins une partie du bloc d'image est déterminée,
- la partie constante est soustraite de l'information de codage de chaque point d'image de l'au moins une partie du bloc d'image, et
- l'information de codage réduite de la partie constante, des points d'image de l'au moins une partie du bloc d'image, est soumise à un codage par transformation adaptée à la forme (SA-DCT),

**caractérisé en ce que**

l'unité du processeur est conçue de telle sorte que la réduction de la partie constante de l'information de codage n'est appliquée que sur des blocs d'image qui contiennent un bord de l'objet d'image (blocs de bord d'image).

**12.** Dispositif selon la revendication 11, dans lequel l'unité du processeur est conçue de telle sorte que le codage par transformation s'effectue de telle sorte que l'énergie du signal de l'information de codage des points d'image dans une zone locale est sensiblement égale à l'énergie du signal de l'information de codage des points d'image transformées dans le domaine des fréquences.

**13.** Dispositif selon la revendication 11 ou 12, dans lequel l'unité de processeur est conçue de telle sorte que des coefficients de transformation $c_j$ sont formés à partir de valeurs de différence $d_j$ de l'information de codage des points d'image, par l'équation ci-dessous:

$$c_j = \sqrt{\frac{2}{N}} \cdot \underline{DCT - N}(p, k) \cdot d_j$$

dans laquelle:

- N représente la taille d'un vecteur d'image à transformer qui contient les points d'image,
- DCT-N représente une matrice de transformation de taille NxN,
- p, k représentent des indices, avec p, k $\in$ [0, N-1].

**14.** Dispositif selon l'une des revendications 11 à 13, dans lequel l'unité de processeur est conçue de telle sorte que la réduction de l'information de codage à la partie constante n'est appliquée que sur des blocs d'image qui sont codées en mode de codage d'image intra.

**15.** Dispositif selon l'une des revendications 11 à 14, dans lequel l'unité de processeur est conçue de telle sorte que la partie constante est mise à l'échelle.

**16.** Dispositif de décodage d'une image numérisée qui contient au moins un objet d'image qui présente un nombre quelconque de points d'image auxquels une information de codage codée par transformation avec adaptation de forme est associée, les points d'image étant regroupés en blocs d'image et une partie constante de l'information de codage des points d'image contenus dans le bloc d'image étant associés à au moins un bloc d'image, avec une unité de processeur qui est conçue de telle sorte que:

- l'information de codage codée par transformation avec adaptation de forme des points d'image de l'au moins une partie du bloc d'image auquel une partie constante est associée, subit un codage de transformation inverse avec adaptation de forme, et
- la partie constante de l'information de codage de chaque point d'image de l'au moins une partie du bloc d'image est ajoutée,

**caractérisé en ce que**

l'unité de processeur est conçue de telle sorte que l'addition de la partie constante à l'information de codage n'est appliquée que sur les blocs d'image qui contiennent un bord de l'objet d'image.

**17.** Dispositif selon la revendication 16, dans lequel l'unité de processeur est conçue de telle sorte que le codage de transformation inverse est effectué de telle sorte que l'énergie du signal de l'information de codage des points d'image de la zone locale est sensiblement égale à l'énergie du signal de l'information de codage des points d'image transformée dans le domaine des fréquences.

**18.** Dispositif selon la revendication 16 ou 17, dans lequel l'unité de processeur est conçue de telle sorte que les valeurs de différence $d_j$ sont formées à partir des coefficients de transformation $c_j$ conformément à l'équation ci-dessous:

$$d_j = \sqrt{\frac{2}{N}} \cdot (\underline{DCT - N}(p, k))^{-1} \cdot c_j$$

dans laquelle

- N représente la grandeur d'un vecteur d'image à transformer qui contient les points d'image,
- DCT-N représente une matrice de transformation de taille NxN,
- p, k représentent des indices, avec p, k $\in$[0, N-1],
- $(\bullet)^{-1}$ représente l'inversion d'une matrice.

**19.** Dispositif selon l'une des revendications 16 à 18, dans lequel l'unité de processeur est conçue de telle sorte que la réduction de l'information de codage de la partie constante est appliquée uniquement sur les blocs d'image qui sont codés en mode de codage d'image intra.

**20.** Dispositif selon l'une des revendications 16 à 19, dans lequel l'unité de processeur est conçue de telle sorte que la partie constante soit mise à l'échelle.

**21.** Support de mémoire lisible par ordinateur, sur lequel est conservé un programme qui, lorsqu'il a été chargé dans une mémoire de l'ordinateur, permet à l'ordinateur d'exécuter les étapes de procédé ci-dessous pour le codage d'une image numérisée qui contient au moins un objet d'image qui présente un nombre quelconque de points d'image auxquels une information de codage est associée:

- les points d'image sont regroupés en blocs d'image,
- pour au moins une partie d'un bloc d'image, une partie constante de l'information de codage des points d'image contenus dans l'au moins une partie du bloc d'image, est déterminée,
- la partie constante de l'information de codage de chaque point d'image de l'au moins une partie du bloc d'image, est soustraite, et
- l'information de codage de laquelle la partie constante a été réduite, des points d'image de l'au moins une partie du bloc d'image, subissent un codage par transformation avec adaptation de forme (SA-DCT),

**caractérisé en ce que**
la réduction de l'information de codage de la partie constante n'est appliquée que sur les blocs d'image qui contiennent un bord de l'objet d'image.

**22.** Support d'enregistrement lisible par ordinateur sur lequel est enregistré un programme, qui, lorsqu'il a été chargé dans la mémoire de l'ordinateur, permet à l'ordinateur d'exécuter les étapes de procédé ci-dessous pour le décodage d'une image numérisée qui contient au moins un objet d'image qui présente un nombre quelconque de points d'image auxquels une information de codage codée par transformation avec adaptation de forme est associée, dans lequel:

- les points d'image sont regroupés en blocs d'image, et
- une partie constante de l'information de codage des points d'image contenus dans le bloc d'image sont associées à au moins un bloc d'image,
- l'information de codage, codée par transformation avec adaptation de forme, des points d'image de l'au moins une partie du bloc d'image auxquels une partie constante est associée, subissent un codage inverse par transformation avec adaptation de forme, et
- la partie constante de l'information de codage est ajoutée à chaque point d'image de l'au moins une partie du bloc d'image,

**caractérisé en ce que**
l'addition de la partie constante à l'information de codage n'est appliquée que sur les blocs d'image qui contiennent un bord de l'objet d'image.

# FIG 1A

Zuführen eines Randbildblocks zur Transformationscodierungseinheit —101

Ermittlung des Gleichanteils —102

Subtraktion des Gleichanteils von der Codierungsinformation aller Bildpunkte des Randbildblocks,
die zu dem Bildobjekt gehören —103

R1

Transformation der Differenzwerte der Bildpunkte
nach der Vorschrift:
$$\underline{c}_j = \sqrt{\frac{2}{N}} \cdot \underline{DCT\text{-}N}\,(p,k) \cdot \underline{d}_j$$ —104

Skalierung des Gleichanteils :
$$DC' = \alpha \cdot DC$$ —105

Quantisierung der Transformationskoeffizienten $\underline{c}_j$
und des skalierten Gleichanteils DC' —106

Entropiecodierung —107

Übertragung der Bildinformation —108

UM

A

## FIG 1B

A

| Entropiedecodierung | 109 |

| inverse Quantisierung | 110 |

inverse Skalierung des skalierten Gleichanteils :
$$DC = \alpha^{-1} \cdot DC'$$
111

Transformation des Transformationskoeffizienten
nach der Vorschrift:
$$\underline{d}_j = \sqrt{\frac{2}{N}} \cdot (\underline{DCT\text{-}N}\,(p,k))^{-1} \cdot \underline{c}_j$$
112

Addition des Gleichanteils zu den Differenzwerten
der Codierungsinformation $\underline{d}_j$
113

R2

# FIG 2

# FIG 4

## FIG 3